# EUROPÄISCHE PATENTSCHRIFT

(11) **EP 3 260 329 B1**
(45) Veröffentlichungstag und Bekanntmachung des Hinweises auf die Patenterteilung: **27.02.2019**
(21) Anmeldenummer: 17175100.1
(22) Anmeldetag: 08.06.2017
(51) Int. Cl.: B60R 1/00, G08G 1/0967, G08G 1/16, H04N 7/18

(54) **SPIEGELERSATZSYSTEM FÜR EIN FAHRZEUG**
MIRROR REPLACEMENT SYSTEM FOR A VEHICLE
SYSTÈME DE REMPLACEMENT DE RÉTROVISEUR POUR VÉHICULE

(30) Priorität: 20.06.2016 DE 102016007522
(43) Veröffentlichungstag der Anmeldung: 27.12.2017
(73) Patentinhaber: MEKRA Lang GmbH & Co. KG, 91465 Ergersheim (DE)
(72) Erfinder: MOULTON, Frederick, Columbia, SC South Carolina 29209 (US); LANG, Werner, 91465 Ergersheim (DE)
(74) Vertreter: Kramer Barske Schmidtchen Patentanwälte PartG mbB

(56) Entgegenhaltungen:
- EP-A2- 2 860 691
- DE-A1-102010 032 411
- DE-A1-102012 001 835
- DE-A1-102013 214 369
- DE-A1-102014 006 153
- US-A1- 2013 229 519

## Beschreibung

### TECHNISCHES GEBIET

Die vorliegende Erfindung betrifft ein Spiegelersatzsystem für ein Fahrzeug, insbesondere für ein Nutzfahrzeug.

### HINTERGRUND

In Kraftfahrzeugen sind sogenannte Sichtfelder gesetzlich vorgeschrieben basierend auf dem Typ des Kraftfahrzeugs, zum Beispiel Krafträdern, Kraftfahrzeuge zum Transportieren von Passagieren, Kraftfahrzeuge zum Transportieren von Gütern, etc. Die Sichtfelder müssen von einer Einrichtung zur indirekten Sicht bereitgestellt werden und müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa sind die Sichtfelder, die für einen Fahrer jederzeit zuverlässig einsehbar sein müssen, in der UN/ECE-Richtlinie Nr. 46 definiert, die nachfolgend weiter beschrieben wird. Weitere relevante Richtlinien schließen beispielsweise die ISO 16505 ein.

Für Nutzfahrzeuge, wie beispielsweise Lastwagen oder Lieferwagen, ist derzeit ein Hauptspiegel auf sowohl der Fahrerseite als auch der Beifahrerseite als die Einrichtung zur indirekten Sicht vorgesehen. Unter Verwendung des Hauptspiegels kann der Fahrzeugfahrer einen ebenen und horizontalen Teil der Straßenoberfläche einer gewissen Breite sehen, der sich von einem festgesetzten Abstand hinter dem Augpunkt des Fahrzeugfahrers bis zum Horizont erstreckt. Zusätzlich muss ein Streifen einer größeren Breite für den Fahrzeugfahrer unter Verwendung dieses Spiegels einsehbar sein, welcher Streifen in einem kurzen Abstand hinter dem Augpunkt des Fahrers beginnt. Solche gesetzlich vorgeschriebenen Gebiete, die permanent und jederzeit von dem Fahrer durch die Verwendung der Einrichtungen zur indirekten Sicht einsehbar sein müssen, werden als Sichtfelder bezeichnet.

Derzeit, gemäß dem Sichtfeld der Klasse II der UN/ECE-Richtlinie Nr. 46, müssen das Sichtfeld des Außenrückspiegels (Hauptspiegel) auf der Fahrerseite und des Außenrückspiegels auf der Beifahrerseite derart angepasst sein, dass der Fahrer wenigstens einen 4 m breiten, flachen, horizontalen Bereich der Straße sehen kann, der von einer Ebene parallel zu der Mittelstreifen-Längs-Vertikalebene erfasst ist und durch den äußersten Punkt des Fahrzeugs auf der Fahrerseite bzw. der Beifahrerseite des Fahrzeugs läuft und der sich von (ab) 20 m hinter dem Augpunkt (Augenpunkte) des Fahrers zum Horizont erstreckt. Zusätzlich muss die Straße für den Fahrer über eine Breite von 1 m sichtbar sein, die von einer Ebene parallel zu der Mittelstreifen-Längs-Vertikalebene erfasst ist und durch den äußersten Punkt des Fahrzeugs läuft, und von (ab) einem Punkt 4 m hinter der vertikalen Ebene, die durch des Fahrers Auge läuft (Augenpunkte), beginnt.

Zusätzlich zu diesen Haupt (Primär-)Spiegeln, müssen Sicht (Blick-)Felder, die von Weitwinkelspiegeln wiedergegeben (gezeigt oder abgebildet) werden, auf beiden Seiten des Nutzfahrzeugs einsehbar sein. Ein Gebiet hinter den Aug(Augen-)Punkten des Fahrers wird mit den Weitwinkelspiegeln in einer bestimmten Länge in der Längsrichtung des Fahrzeugs gesehen; dieses Gebiet ist breiter als das Gebiet, das über den Hauptspiegel einsehbar ist, erstreckt sich jedoch nur eine gewisse Länge entlang des Fahrzeugs. Dieses Gebiet ist als das Sichtfeld IV (Klasse IV) gemäß der UN/ECE-Richtlinie Nr. 46 definiert.

Derzeit, gemäß dem Sichtfeld der Klasse IV der UN/ECE-Richtlinie Nr. 46 müssen das Sichtfeld des "Weitwinkel"-Außenspiegels auf der Fahrerseite und des "Weitwinkel"-Außenspiegels auf der Beifahrerseite derart sein, dass der Fahrer wenigstens einen 15 m breiten, flachen, horizontalen Bereich der Straße sehen kann, der von einer Ebene parallel zu der Mittelstreifen-Längs-Vertikalebene erfasst ist und durch den äußersten Punkt des Fahrzeugs auf der Fahrerseite bzw. der Beifahrerseite des Fahrzeugs läuft und der sich von (ab) wenigstens 10 m bis 25 m hinter dem Fahrerauge (Augenpunkte) erstreckt. Zusätzlich muss die Straße für den Fahrer über eine Breite von 4,5 m einsehbar sein, die von einer Ebene parallel zu der Mittelstreifen-Längs-Vertikalebene erfasst ist und durch den äußersten Punkt des Fahrzeugs läuft und von einem Punkt 1,5 m hinter der vertikalen Ebene startet, die durch das Auge (Augenpunkte) des Fahrers läuft.

Üblicherweise und wie oben beschrieben, ist die Betrachtung der Sichtfelder mit einem oder mehreren Spiegeln vorgesehen. Jedoch haben Spiegel einige Nachteile. Zum Beispiel zeigen Spiegel dem Fahrer lediglich Objekte, die auf derselben Seite des Spiegels wie die Fahrer sind. Irgendein Objekt hinter einem Spiegel kann nicht durch diesen Spiegel gezeigt werden. Zusätzlich zeigen Spiegel, die lediglich aus flachem Glas hergestellt sind, dem Fahrer einen kleinen Bereich, außer die Spiegel sind sehr nahe bei dem Fahrer. Falls sie konvex geformt sind, erzeugt dies eine Bildverzerrung. Große Fahrzeuge weisen üblicherweise sieben oder mehr Spiegel auf, die um die Außenseite des Fahrzeugs herum montiert sind, von denen die meisten verzerrt und konvex sind, und diese Fahrzeuge weisen üblicherweise sogar immer noch blinde Flecke auf, trotz all der Spiegel. Zusätzlich ist es schwierig für den Fahrer, auf alle relevanten Spiegel zur selben Zeit zu achten.

In letzter Zeit wurde es zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen. In solchen Kamerasystemen erfasst (ermittelt und speichert) eine Bildsensoreinrichtung kontinuierlich ein Bild. Die (Video-) Daten, die von der Bilderfassungseinheit erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, die jederzeit für den Fahrer permanent einsehbar ist, während sie eine verbesserte Nachtansicht, flexiblere Anordnungsmöglichkeiten und größere Sichtfelder mit der Möglichkeit einer geringeren Verzerrung anbieten.

Permanent einsehbar bedeutet in diesem Zusammenhang, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon oder durch Einblenden anderer Darstellungen derart, dass das Sichtfeld nicht komplett gesehen werden kann. Entsprechend werden das entsprechende Sichtfeld oder die Sichtfelder kontinuierlich und in Echtzeit auf der Anzeigeeinrichtung gezeigt. Dies gilt für alle Fahrzeugzustände, bei denen der Zündschalter eingeschaltet ist, bevorzugter Weise zum Beispiel gekoppelt an einen Sensor, der ein entsprechendes Signal empfängt, beispielsweise eine Türöffnungssignal oder ein Zündungseinschaltsignal. Ein Spiegelersatzsystem gemäß dem Oberbegriff des Anspruchs 1 ist beispielsweise aus der DE 10 2014 006 153 A1 bekannt. Ferner ist eine Bildbearbeitungsvorrichtung für ein Spiegelersatzsystems aus der EP 2 860 691 A2 bekannt.

Die US 2013/0229519 A1 offenbart eine automatische Rückfahranzeige, die eine Einzel-Kamerakonfiguration und eine Dual-Kamerakonfiguration aufweist. In der Einzelkamerakonfiguration, sobald sich ein Unterhaltungsbildschirm in einem an dem Dach montierten Unterhaltungssystem öffnet oder wenn der Fahrer das Fahrzeug zurück setzt (rückwärts fährt), wird die Ansicht einer ersten Kamera nahe des hinteren Nummernschilds auf dem Rückfahrspiegel angezeigt. In der Dual-Kameraversion, wenn sich der Unterhaltungsbildschirm öffnet, wird die Ansicht einer zweiten Kamera nahe dem Dach des Fahrzeugs in dem Rückfahrspiegel angezeigt. In der Dual-Kameraversion, falls der Fahrer das Fahrzeug zurück setzt, mit dem Unterhaltungsbildschirm geöffnet oder geschlossen, würde die Ansicht der ersten Kamera stattdessen angezeigt werden. In beiden Versionen, sobald der Unterhaltung Bildschirm sich schließt (und das Fahrzeug sich nicht in Rückwärtsfahrt befindet), kehrt der Rückfahrspiegel dahin zurück, ein regulärer Spiegel zu sein.

Die US 7,463,381 offenbart ein Verfahren, das das Auswählen einer Videoquellenansicht aus wenigstens einer aus einer Vielzahl von fahrzeugmontierten Videoquellen basierend auf einer Ermittlung eines Fahrzeugereignisses aufweist. Diese Videoquellenansicht kann in einem Präsentationsmodus angezeigt werden. Das Verfahren kann das Zusammenführen einer Vielzahl von Fahrzeugereignissen mit einer Videoquellenansicht oder einem Videopräsentationsmodus aufweisen. Ein System weist ein Anzeige-logisches Auswählen einer Videoquellenansicht aus einer Vielzahl von fahrzeugmontierten Videoquellen basierend auf einer Ermittlung eines Fahrzeugereignisses auf. Das System kann Präsentationsregeln beinhalten, die eine Zusammenführung zwischen einer Vielzahl von Fahrzeugereignissen und einer Videoquellenansicht und/oder eines Videopräsentationsmodus genauer beschreiben. Die Präsentationsregeln sind editierbar und konfigurierbar.

Moderne Spiegel erzeugen ein nahezu perfekt scharfes Bild für einen Fahrer. Der Detaillierungsgrad, der dem Fahrer zur Verfügung steht, hängt von dem Abstand zu dem Objekt und der Sehkraft des Fahrers ab. Mit Kamerasystemen wird der Detaillierungsgrad von vielen verschiedenen Parametern beeinflusst: Die Auflösung des Kamerasensors, das Sichtfeld der Kamera, aber auch die Auflösung des Monitors, wie viel des Kamerasichtfeldes auf dem Monitor angezeigt wird, wie weit der Monitor von dem Fahrerplatz entfernt ist und die Sehkraft des Fahrers. In manchen Kombinationen dieser Parameter können die Fahrer imstande sein, hinein zu zoomen (eine Ansicht zu vergrößern) und weit entfernte Objekte klar zu sehen, die sie in einem Spiegel nicht imstande wären zu sehen. In anderen Kombinationen dieser Parameter kann der Fahrer auf ein Gebiet mit einer derart schlechten Auflösung schauen, dass er es versäumt, eine gefährliche Verkehrssituation zu erkennen.

Ferner ist der Fahrer durch Spiegel imstande, diese natürliche Tiefenschärfe zu verwenden, um drei Dimensionen in dem Spiegel zu sehen. Dies ermöglicht dem Fahrer ein komfortables Verständnis seiner eigenen Position in Bezug auf die Umwelt des Objekts darin. Der Fahrer erlangt keine Tiefenschärfe, während er Kamerasysteme mit den üblicherweise verfügbaren zweidimensionalen Anzeigen verwendet, was bedeutet, dass der Fahrer die sichtbare Größe von Merkmalen auf dem Bildschirm verwenden muss, um sowohl die relative Position als auch die relative Geschwindigkeit zu beurteilen. Es kann insbesondere schwierig sein, diese Beurteilung durchzuführen, wenn es dem Fahrer ermöglicht wird, in ein Bild hinein oder aus einem Bild heraus zu zoomen (eine Ansicht zu vergrößern oder zu verkleinern). Falls es dem Fahrer ermöglicht wird, hinein und hinaus zu zoomen, kann er sehr leicht den Überblick darüber verlieren, wie weit Objekte in der Umgebung entfernt sind, und dies kann gefährliche Situationen auf der Straße erzeugen.

Ferner ist der Fahrer durch Spiegel imstande, seinen Kopf durch Neigen und durch Drehen zum Betrachten verschiedener Gebiete zu bewegen. Dies gibt dem Fahrer einen Zugang zu einem breiteren (größeren) Sichtfeld und es gibt ihm auch ein komfortables Verständnis, worauf er in der umliegenden Umgebung blickt. Kamerasysteme können es dem Fahrer ermöglichen, herum zu schwenken, um verschiedene Gebiete zu sehen, aber der Fahrer verwendet die physikalischen Sinneseindrücke des Neigens und Betrachtens, so dass er den Überblick verlieren kann, worauf er exakt in der Umgebung blickt. Dies kann eine gefährliche Situation erzeugen, wenn der Fahrer den Ort eines Objekts in seiner Sicht missdeutet oder falls der Fahrer das Kamerasystem ein irrelevantes Gebiet der Umgebung und nicht die wichtigen Gebiete anzeigen lässt.

### ZUSAMMENFASSUNG

Entsprechend ist es eine Aufgabe der vorliegenden Erfindung, ein Spiegelersatzsystem vorzusehen, das es dem Fahrer ermöglicht, mit dem Spiegelersatzsystem zu interagieren, um gewünschte Merkmale zu sehen, während der Fahrer die Ansicht von gesetzlich vorgeschriebenen Sichtfeldern jederzeit und in Echtzeit zuverlässig sieht. Gewünschte Merkmale sind angepasste Einstellungen des Sichtfelds, wie beispielsweise eine spezielle Auflösung oder ein spezieller Kontrast des Sichtfelds oder ein spezieller Fokus (Zoom) in die Sichtfelder.

Die oben genannte Aufgabe wird durch ein Spiegelersatzsystem für ein Fahrzeug mit den Merkmalen nach Anspruch 1 gelöst. Bevorzugte Ausführungsformen sind in den abhängigen Ansprüchen angegeben.

Der Erfindung liegt der Gedanke zugrunde, die Darstellung von Daten, die auf einer Bildanzeigeeinheit, wie beispielsweise einem Monitor, eines Spiegelersatzsystems für ein Fahrzeug gezeigt sind gemäß der Präferenz (Vorliebe) eines Fahrers zu verbessern, so dass der Fahrer ein besseres Bewusstsein (Verständnis) der momentanen Situation um sein Fahrzeug herum hat, während er die gesetzlich vorgeschriebenen Sichtfelder jederzeit in einer kontinuierlichen Darstellung in Echtzeit permanent sieht. Die Modifizierungsparameter für die auf der Bildanzeigeeinheit anzuzeigenden Daten weisen eines oder mehrere der folgenden auf: das Seitenverhältnis, der Fokus (Zoom), Positionen verschiedener Ansichtsrahmen, Auflösung, Kontrast, Verzerrung/Entzerrung oder zusätzliche grafische Einblendungen (Überlagerungen). Um die Bilder, die dem Fahrer angezeigt werden, das heißt die Bilddaten, zu verbessern, ist das System derart entworfen, dass der Fahrer die Merkmale, die auf der Bildanzeigeeinheit gezeigt werden, selbst beeinflussen oder anpassen kann, jedoch nur insoweit, als dass die Ansichten der gesetzlich vorgeschriebenen Sichtfelder nicht beeinträchtigt werden. Das System ist derart entworfen, dass der Fahrer angepasste Einstellungen vor dem Starten des Motors durchführen kann, d.h., während des Parkens, oder während des Fahrbetriebs. Die Fahrereingaben (Anforderungen, Einstellungen) werden von einem Fahrersensor empfangen, der die Anforderungen (Wünsche) als Fahrerparameter an eine Betriebssteuereinheit (Sicherheitssteuereinheit) leitet.

Die Kombination solcher Voreinstellungen, Fahrereingaben und zum Beispiel gesetzlicher Anforderungen legen den Betriebsbereich des Systems fest, das heißt den Betriebsbereich der angezeigten Ansicht, der den Minimalanforderungen dessen, was auf der Anzeige auf welche Art und Weise anzuzeigen ist, entspricht. Wenn sich alle angezeigten Ansichten innerhalb dieses Betriebsbereichs befinden, befindet sich das System gänzlich innerhalb des Betriebsbereichs. Der Betriebsbereich kann basierend auf einer Vielzahl von voreingestellten Regeln festgelegt sein und zum Überprüfen, dass diese Regeln die ganze Zeit eingehalten werden, kann die Definition des Betriebsbereichs diskrete Regeln und/oder eine komplexe Logik umfassen. Der Betriebsbereich ist nicht notwendigerweise für alle möglichen auftretenden Fahrsituationen identisch und kann Unterteilungen (Unterabschnitte) aufweisen, die den Betriebsbereich für spezielle Fahrsituationen definieren.

Die Betriebssteuereinheit definiert ferner einen Umformatierungsbereich der Umformatierungsparameter, die in eine Bilderfassungseinheit-Steuerung (Kamerasteuerung, Berechnungseinheit, CPU) eingegeben werden. Alternativ kann die Bilderfassungseinheit-Steuerung den Umformatierungsbereich der Umformatierungsparameter definieren, d.h. diejenigen Parameter, mit denen das erfasste Bild unformatiert wird, bevor es auf der Bildanzeigeeinheit angezeigt wird. Die derzeitigen (gültigen) Umformatierungsparameter werden von dem System derart festgelegt, dass das System stets innerhalb des Betriebsbereichs bleibt, und basieren auf zusätzlichen Daten, wie beispielsweise Daten, die von Fahrzeugsensoren, von Sensoren, die Daten von außerhalb und/oder Daten von Bedienereingaben empfangen, wie derzeitige Fokusvorlieben, erfasst bzw. empfangen werden. Die Bilderfassungseinheit-Steuerung empfängt auch direkte (live) Bilddaten von einer oder mehrerer Bilderfassungseinheit(en) (Kameras) und formatiert diese Daten derart um, dass sie zum Anzeigen auf einer oder mehrerer Bildanzeigeeinheit(en) gemäß den Umformatierungsparametern geeignet sind. Die Ansicht auf der Bildanzeigeeinheit hängt von den Umformatierungsparametern ab, d.h. sind die Bilddaten, die von der Bilderfassungseinheit empfangen werden und mittels der Umformatierungsparameter unformatiert sind. Wenn das System, insbesondere die Betriebssteuereinheit, die die Umformatierungsparameter festlegt und bestimmt, ermittelt, dass ein Umformatieren der Daten für das auf der Bildanzeigeeinheit anzuzeigende Bild zu der angezeigten Ansicht führen würde, die sich nicht mehr innerhalb des vorgegebenen Betriebsbereichs des Systems befindet, d.h. das angezeigte Bild würde nicht mehr die Anforderungen erfüllen, die von dem System oder dem Bediener vorgegeben sind, wie beispielsweise die Sichtfelder, die gesetzlich vorgeschrieben sind, dass sie jederzeit einsehbar sind, würden nicht länger angezeigt werden, werden die Umformatierungsparameter automatisch modifiziert, überschrieben, blockiert oder von dem System derart berichtigt, dass sichergestellt ist, dass die angezeigte Ansicht und das System innerhalb des Betriebsbereichs verbleiben. Das bedeutet, dass die Betriebssteuereinheit die Umformatierungsparameter derart steuert, dass sie innerhalb eines vorgegebenen Umformatierungsbereichs der Umformatierungsparameter sind. Dies schließt aus, dass die Bilddaten, die auf der Bildanzeigeeinheit angezeigt werden, sich nicht jederzeit innerhalb des Betriebsbereichs befinden. Das System unterstützt den Fahrer darin, jederzeit die wichtigsten Ansichten und Informationen klar und effektiv zu sehen, während die Freiheit des Fahrers, das zu sehen, was er sehen möchte und wenn er es sehen möchte, maximiert ist, während der Betrieb des Systems die gesetzlich vorgeschriebenen Sichtfelder zeigt und das Erfüllen aller anderen Systemanforderungen, die zum Übereinstimmen mit dem Betriebsbereich benötigt werden, sichergestellt wird.

Solch ein System erfordert ein kontinuierliches Beobachten der Sichtfelder und der Fahrereingaben, ein permanentes Beurteilen, ob die Sichtfelder oder andere (gesetzliche) Anforderungen und die Fahrereingaben übereinstimmen, und eine Echtzeitanpassung der Umformatierungsparameter für die Daten, die auf der Bildanzeigeeinheit angezeigt werden, abhängig von den Sichtfeldern und den Fahrereingaben. Bilderfassungseinheiten, wie beispielsweise Kamerasysteme, ermöglichen eine Fahrerflexibilität jenseits dessen, was von Spiegelsystemen angeboten wird. Folglich ist es notwendig, dass solche Bilderfassungseinheiten angepasst sind, dass sie dem Fahrer den derzeitigen Zustand des Spiegelsystems vollständig bewusst machen, und angepasst sind, es sobald wie möglich in einen sicheren Zustand zurückzuführen jederzeit, wenn die Sicherheit beeinträchtigt sein kann. D.h., das System ist angepasst, die Fahrereingaben zu übersteuern, wenn die Eingaben dazu führen, dass die Bildanzeigeeinheit nicht mehr innerhalb des Betriebsbereichs anzeigt, zum Beispiel nicht mehr die gesetzlich vorgeschriebenen Sichtfelder anzeigt und/oder eine sicherheitskritische Situation nicht anzeigt, wie beispielsweise eine bevorstehende Kollisionssituation, wenn eine solche vorliegt, und/oder andere Systemanforderungen, die in dem Systembetriebsbereich enthalten sind, nicht erfüllt.

Das Spiegelersatzsystem gemäß der vorliegenden Erfindung kann in Fahrzeugen, bevorzugter Weise in Nutzfahrzeugen, aber auch in Passagierfahrzeugen verwendet werden. Das System kann als ein Spiegelersatzsystem, zum Beispiel für Hauptspiegel und Weitwinkelspiegel eines Nutzfahrzeugs mit Bezug auf die Auflösung der Daten und die Einsicht von gesetzlich vorgeschriebenen Sichtfeldern dienen und es zur selben Zeit dem Fahrer ermöglichen, komfortabel und leicht zu verschiedenen Ansichten seiner Umgebung zu navigieren, ohne das räumliche und situationsbezogene Bewusstsein des Fahrers zu beeinträchtigen.

Zusätzlich kann die Betriebssteuereinheit angepasst sein, einen Umformatierungsbereich der Umformatierungsparameter zu definieren, so dass das Umformatieren der Daten mit den Umformatierungsparametern sicherstellt, dass der Betriebsbereich des Systems eingehalten wird. Alternativ kann die Bilderfassungseinheit-Steuerung oder jede andere geeignete Einheit den Umformatierungsbereich der Umformatierungsparameter festlegen.

Die Betriebssteuereinheit und die Bilderfassungseinheit-Steuerung können als eine einzige Steuerung vorgesehen sein, die angepasst ist, den Umformatierungsbereich der Umformatierungsparameter festzulegen. Die Betriebssteuereinheit und/oder die Bilderfassungseinheit-Steuerung können in einer elektronischen Steuereinheit (ECU) des Fahrzeugs enthalten sein und/oder können eine Mikrosteuerung sein, basierend auf einer Halbleitertechnologie. Grundsätzlich kann die Bilderfassungseinheit angepasst sein, dass sie all die Aufgaben der Betriebssteuereinheit durchführt, entweder zusätzlich oder alternativ zu der Steuereinheit. Alle Komponenten (Bauteile), die eine oder mehrere der Anzeigeeinheit, der Bilderfassungseinheit-Steuerung, der Bilderfassungseinheit, der Betriebssteuereinheit enthält, können separat oder kombiniert vorgesehen sein. Ferner, soweit möglich, können sie in einem Fahrzeugbordcomputer und/oder einem Fahrerassistenzsystem integriert sein.

In einer bevorzugten Ausführungsform entspricht das Sichtfeld dem Sichtfeld eines Hauptspiegels und/oder dem Sichtfeld eines Weitwinkelspiegels, wie beispielsweise definiert in der UN/ECE-Richtlinie Nr. 46 für Rückspiegel. Das heißt, die Bilderfassungseinheit ist angepasst, ein Bild zu erfassen, das einem Hauptspiegel (Sichtfeld II) entspricht, und/oder ein Bild zu erfassen, das einem Weitwinkelspiegel (Sichtfeld IV) entspricht. Jedoch ist es auch denkbar, dass zum Beispiel zwei Bilderfassungseinheiten existieren, von denen eine angepasst ist zum Erfassen des Bildes, das einem Hauptspiegel (Sichtfeld II) entspricht, und das andere angepasst ist zum Erfassen eines Bildes, das einem Weitwinkelspiegel (Sichtfeld IV) entspricht.

Bevorzugter Weise ist die Betriebssteuereinheit angepasst, den Betriebsbereich basierend auf gesetzlichen Anforderungen zum Anzeigen von Sichtfeldern und Fahrzeugabmessungen zu definieren. Gesetzliche Anforderungen können UN-Richtlinien beinhalten, die von der europäischen Wirtschaftskommission erlassen werden, wie beispielsweise die UN/ECE-Richtlinie Nr. 46 für Rückspiegel. Es ist jedoch auch denkbar, dass die Betriebssteuereinheit angepasst ist, den Betriebsbereich basierend auf Richtlinien zu definieren, beispielsweise ISO-Standards, wie beispielsweise die ISO 16505, Richtlinien im Hinblick auf einen minimalen und/oder maximalen Kontrast, eine minimale und/oder maximale Helligkeit und Auflösung, aber auch basierend auf kundenspezifische Fahrzeugvorschriften. Ferner ist es denkbar, dass die Betriebssteuereinheit angepasst ist, den Betriebsbereich basierend auf Fahrzeugreferenzen, wie beispielsweise die Anwesenheit oder Abwesenheit eines Anhängers, zu definieren. Je mehr Daten zum Definieren des Betriebsbereichs verwendet werden, desto exakter kann der Betriebsbereich und nachfolgend der Umformatierungsbereich für die Umformatierungsparameter definiert werden. Der Betriebsbereich kann zusätzlich basierend auf einer oder mehrerer Bedienereingaben definiert werden, wie zum Beispiel Minimalanforderungen für den Zoom, die Auflösung, den Kontrast der angezeigten Ansichten.

In einer bevorzugten Ausführungsform der Erfindung ist das Spiegelersatzsystem ferner mit wenigstens einem Fahrzeugsensor versehen, der angepasst ist zum Ermitteln von Fahrzeugparameterinformationen des Fahrzeugs, wobei die Betriebssteuereinheit angepasst ist zum Steuern der Umformatierungsparameter basierend auf Fahrzeugparametern, die von wenigstens einem Fahrzeugsensor empfangen werden. Fahrzeugparameter beinhalten bevorzugter Weise eine oder mehrere aus einer Fahrzeugfahrtrichtung, der Fahrzeuggeschwindigkeit, eines Fahrzeugstandorts, einer Anhängeranwesenheit oder - Abwesenheit und/oder Fahrersteuerungen. Fahrersteuerungen können Fahrtrichtungsanzeigen (Blinker), Gaspedal- oder Bremssteuerungen (der Betrag der Beschleunigung oder der Verzögerung), Scheinwerfersteuerungen, etc. sein. Fahrzeugparameter können auch Informationen über den Fahrer beinhalten, wie beispielsweise eine derzeitige Sitzposition, ob die Augen des Fahrers vollständig geöffnet oder teilweise geschlossen sind, ob der Fahrer müde zu sein scheint, die Fahrergröße und/oder das Gewicht, und jeder andere Parameter, der automatisch unter Verwendung von Sensoren im Inneren des Fahrzeugs ermittelt werden kann, insbesondere von Sensoren zur aktiven Fahrerbeobachtung. Wenigstens ein Fahrzeugsensor zusätzlich zu dem wenigstens einen Fahrersensor ermöglicht eine genauere Definition des Umformatierungsbereichs für die Umformatierungsparameter.

Zusätzlich oder alternativ ist die Betriebssteuereinheit angepasst, die Umformatierungsparameter basierend auf einer oder mehrere Bedienereingaben zu definieren, bevorzugter Weise Zoom-, Auflösungs- und/oder Kontrasteinstellungen und/oder zusätzliche grafische Eingaben und/oder Einblendungseingaben.

Alternativ oder zusätzlich kann der Betriebsbereich in verschiedenen Fahrsituationen verschieden sein und die Betriebssteuereinheit ist angepasst, den der Fahrsituationen entsprechenden spezifischen Betriebsbereich für eine Definition des Umformatierungsbereichs auszuwählen. Geeignete Auswahlparameter basieren zum Beispiel auf einer Fahrsituation, die von dem Fahrzeugsensor erfasst wird, oder auf Wetterbedingungen, die von dem Fahrzeugsensor erfasst werden, wie beispielsweise das Anschalten von Nebelscheinwerfern oder Scheibenwischern, und/oder durch zusätzliche Sensoren, wie beispielsweise Temperatursensoren. Fahrsituationen können Vorwärts- und Rückwärtsfahren, Geschwindigkeit, Gang, etc. beinhalten. Auf der anderen Seite können solche Parameter auch zum Einstellen der Umformatierungsparameter verwendet werden, d.h. ohne vorherige Auswahl des situationsspezifischen Betriebsbereichs.

Bevorzugter Weise weist das Spiegelersatzsystem ferner eine Bildanalyseeinheit auf, die angepasst ist zum Analysieren eines oder mehrerer Bilder, die von der wenigstens einen Bilderfassungseinheit erfasst werden, basierend auf Informationseingaben des Fahrers und/oder auf Fahrzeugparameterinformationen. Mit anderen Worten ist die Bildanalyseeinheit angepasst zum Analysieren, ob Daten in den von der wenigstens einen Bilderfassungseinheit erfassten Videodaten existieren, die auf der Bildanzeigeeinheit angezeigt werden müssen oder verbessert oder hervorgehoben werden müssen innerhalb des anzuzeigenden Bildes infolge von entsprechenden Fahrereingaben bzw. -anforderungen oder F ahrzeugparameterinformationen.

Bevorzugter Weise ist die Betriebssteuereinheit angepasst, Verkehrsdaten von außen liegenden (externen) Speichermedien zu empfangen, wie beispielsweise einem Server, einer Verkehr-Nachschlagetabelle und/oder Verkehrsdatenbanken, wobei die Betriebssteuereinheit angepasst ist, Informationen drahtlos (wireless) unter Verwendung von V2V- oder V2X-Netzwerken zu erlangen. Die Betriebssteuereinheit und/oder die Bilderfassungseinheit-Steuerung ist/sind angepasst zum Verwenden der Verkehrsdaten zum Erzeugen von Anzeigeinformationen. Zum Beispiel kann die Betriebssteuereinheit angepasst sein zum Empfangen einer oder mehrere örtlicher Geschwindigkeitsbeschränkungen in diesem Gebiet, örtlicher Verkehrsinformationen, Informationen über Umleitungen und/oder bevorstehende Fernstraßenausfahrten. Dies ermöglicht eine Feineinstellung der Umformatierungsparameter, ermöglicht es dem System aber auch, die Fahrersteuerungen aktiv an vorgegebene Informationen anzupassen. Mit anderen Worten kann die Betriebssteuereinheit als ein Fahrerassistenzsystem (Advanced Driver Assistance System, ADAS) fungieren, wodurch die Sicherheit des Fahrers und der Umgebung und der Komfort des Fahrers verbessert werden kann. Die Verwendung eines solchen Fahrerassistenzsystems fördert auch ein ökonomischeres Fahren.

Ferner ist/sind die Betriebssteuereinheit und/oder die Bilderfassungseinheit angepasst zum Empfangen zusätzlicher Sensordaten von einem oder mehreren Abstandssensoreinheiten und die Betriebssteuereinheit und/oder die Bilderfassungseinheit ist/sind angepasst zum Verwenden der zusätzlichen Sensordaten zum Erzeugen von Anzeigeinformationen. Bevorzugter Weise ist/sind die Betriebssteuereinheit und/oder die Bilderfassungseinheit angepasst zum Empfangen zusätzlicher Sensordaten, die Objekterkennungsergebnisse von anderen Bilderfassungseinheiten und/oder Steuereinheiten umfassen. Zum Beispiel können solche zusätzlichen Sensordaten Daten beinhalten, die von Systemen basierend auf RADAR (radio detection and ranging) oder LIDAR (light detection and ranging) erhalten werden.

In eine bevorzugten Ausführungsform ist/sind die Betriebssteuereinheit und/oder die Bilderfassungseinheit-Steuerung angepasst zum Definieren des Umformatierungsbereichs für die Umformatierungsparameter basierend auf Sicherheitsinformationen, bevorzugter Weise Kollisionsvorhersage-Informationen, die Informationen über Hindernisse enthalten, und die Betriebssteuereinheit und/oder die Bilderfassungseinheit-Steuerung ist/sind angepasst zum Verwenden der zusätzlichen Sensordaten zum Erzeugen von Anzeigeinformationen. Zum Beispiel ist die Betriebssteuereinheit angepasst zum Versorgen des Fahrers mit Informationen über Hindernisse, wie beispielsweise Fahrradfahrer, auf der Bildanzeigeeinheit in einer hervorgehobenen Art und Weise und/oder kann diese mit/als einen Alarm anzeigen. Solche Sicherheitsinformationen können zum Beispiel durch Bildanalyse des erfassten Bildes oder von Abstandssensoren, die an dem Fahrzeug vorgesehen sind, erhalten werden.

Bevorzugter Weise sind die Betriebssteuereinheit und die Bilderfassungseinheit-Steuerung in dieselbe Hardware implementiert, weisen jedoch eine separate Software auf. Ein gemeinsames Gehäuse für die Betriebssteuereinheit und die Bilderfassungseinheit ist leicht herzustellen und folglich Kosten sparend. Jedoch ist es auch denkbar, dass die Betriebssteuereinheit und die Bilderfassungseinheit-Steuerung, insbesondere wenn sie als eine Einzelsteuerung vorgesehen sind, eine gemeinsame Software und eine gemeinsame Hardware aufweisen.

Bevorzugter Weise enthält der Fahrersensor eines oder mehrere aus wenigstens einem Berührfeld (Touchpad), einer Augenverfolgungseinrichtung, einer Sprachsteuerung, einem Hebel, Steuerknüppel (Joystick) und/oder einem Knopf. Insbesondere ist der Fahrersensor angepasst zum automatischen Ermitteln von Fahrereingaben (beispielsweise Eingaben, die durch kontinuierliches Beobachten der Augenbewegung des Fahrers unter Verwendung einer Augenverfolgungseinrichtung empfangen werden) oder zum Empfangen von Fahreranforderungen, die aktiv von dem Fahrer selbst eingegeben werden (wie beispielsweise Eingaben, die durch eine spezifische Handlung des Fahrers unter Verwendung von beispielsweise eines Touchpads, Hebels oder Steuerknüppels empfangen werden). Eine automatische Ermittlung einer Fahreranforderung erfordert, dass der Fahrersensor kontinuierlich das Fahrerverhalten, beispielsweise durch Augenverfolgung, beobachtet bzw. ermittelt. Das Empfangen von aktiven Fahrereingaben erfordert, dass der Fahrer aktiv eine oder mehrere der obigen Steuereinheiten auswählt, zum Beispiel ein Berührfeld, um Informationen in die Betriebssteuereinheit einzugeben und folglich die auf der Bildanzeigeeinheit gezeigten Daten zu beeinflussen.

Bevorzugter Weise ist die Betriebssteuereinheit angepasst zum Sicherstellen, dass die minimale Merkmalsauflösung für eine spezifische Bilderfassungseinheit-Ansicht erfüllt wird. Zum Beispiel weist der Betriebsbereich eine minimale Größe/Auflösung für jede von dem Fahrer klar zu sehende Ansicht auf und die Betriebssteuereinheit berechnet kontinuierlich die Größe/Auflösung für jede Ansicht. Es kann dem Fahrer erlaubt sein, eine, zwei, drei oder mehr Bilderfassungseinheiten auf einem Monitor anzuzeigen, aber falls der Fahrer versucht in eine bestimmte Bilderfassungseinheit hinein zu zoomen, so dass der Betriebsbereich verletzt würde, wird die Betriebssteuereinheit die Bilderfassungseinheit-Steuerung übersteuern und ein weiteres Zoomen verhindern. Falls der Fahrer versucht, eine bestimmte Bilderfassungseinheit-Ansicht auf dem Monitor zu verkleinern, um mehr Platz zu machen für andere Bilderfassungseinheiten, kann die Betriebssteuereinheit diese Handlung zum Aufrechterhalten der Größe/Auflösung innerhalb des Betriebsbereichs übersteuern. Die Betriebssteuereinheit kann den Abstand des Monitors zu den Augen des Fahrers, die Auflösung des Monitors, die Lichtverhältnisse in der Fahrerkabine zu diesem Zeitpunkt, etc. berücksichtigen.

Alternativ oder zusätzlich kann der Betriebsbereich berücksichtigen, dass Merkmale einer Ansicht, die der Fahrer zu sehen wünscht (gewünschte Merkmale), auf wenigstens einer Bildanzeigeeinheit zu jeder Zeit sichtbar sind. Gewünschte Merkmale können die Seite eines Anhängers für einen großen Lastwagen, die Anhängerhinterkante oder das Bild eines Fahrzeugs, das, zum Beispiel unter Verwendung eines Radarsensors, als relevant ermittelt worden ist, umfassen. Wenn der Fahrer versucht die Bilderfassungseinheit-Ansicht auf eine Art und Weise zu schwenken oder zu zoomen, die diese gewünschten Merkmale verdeckt, ist die Betriebssteuereinheit angepasst zum Übersteuern dieser Handlung zum Beibehalten der Merkmale in Sicht gemäß dem Systembetriebsbereich. Falls die Betriebssteuereinheit entscheidet, dass eine bestimmte Bilderfassungseinheit die beste Ansicht eines gewünschten Merkmals vorsieht, das von dem Betriebsbereich gefordert wird, aber der Fahrer die von dieser Bilderfassungseinheit gesammelten Daten derzeit nicht sieht, ist die Betriebssteuereinheit angepasst zum Anzeigen von Daten dieser Bilderfassungseinheit auf dem Monitor ohne Eingreifen des Fahrers (Fahrerintervention). Falls der Fahrer versucht, die von einer anderen Bilderfassungseinheit gesammelten Daten anzuzeigen oder die gezeigten Ansichten zu Daten einer Bilderfassungseinheit auf solch eine Art und Weise zu bewegen, dass er gewünschte Merkmale versteckt, ist die Betriebssteuereinheit angepasst zum Übersteuern der Umformatierungsparameter, die aufgrund einer Fahrereingabe gewählt wurden, zum Erhalten der Umformatierungsparameter innerhalb des Umformatierungsbereichs, so dass das System innerhalb des Betriebsbereichs verbleibt. Falls der Fahrer versucht eine grafische Einblendung anzuschalten oder andere Informationen auf dem Monitor übertrieben oder anstelle einer Ansicht mit gewünschten Merkmalen großzuziehen, ist die Betriebssteuereinheit angepasst zum Übersteuern dieser Fahrereingabe gemäß des Betriebsbereichs.

Alternativ oder zusätzlich ist die Betriebssteuereinheit angepasst zum Verbessern von gewünschten Merkmalen einer Ansicht durch Anpassen der Helligkeits- und/oder Kontrasteinstellungen, bevorzugter Weise für einige bestimmte Bereiche einer Ansicht, zum Beispiel falls eine Anpassung der Helligkeits- und/oder Kontrasteinstellungen die gewünschten Merkmale leichter erkennbar machen, und falls eine minimale Erkennbarkeit eine Anforderung gemäß des Betriebsbereichs ist. Falls Umformatierungsparameter basierend auf Fahrereingaben versuchen die Monitorhelligkeit oder den Kontrast in der Nacht für den Augenkomfort zu reduzieren, ist die Betriebssteuereinheit angepasst zum Erkennen eines oder mehrerer Fahrzeuge, die sich von hinten nähern, oder von Hindernissen auf der vorausliegenden Straße, und zum Überlagern der Helligkeits- und Kontrasteinstellungen auf ein minimales Niveau (Level), das für eine leichte Erkennbarkeit dieser Hindernisse notwendig ist, d.h. das minimale Niveau innerhalb des Betriebsbereichs. Die Betriebssteuereinheit ist auch angepasst zum künstlichen Verbessern des Kontrastes für lediglich einige Bereiche einer Ansicht, falls es notwendig erscheint gemäß des definierten Betriebsbereichs. Zum Beispiel falls der Fahrer versucht einen Spurwechsel auszuführen, wenn sich bereits ein Fahrzeug auf der gewünschten Spur befindet, ist die Betriebssteuereinheit angepasst, den sichtbaren Kontrast des anderen Fahrzeugs zu erhöhen, während der Kontrast der umliegenden Umgebung vorrübergehend reduziert wird, um es dem Fahrer zu erleichtern, das andere Fahrzeug zu erkennen. Die Betriebssteuereinheit ist auch angepasst, den Kontrast künstlich zu verbessern oder die Helligkeit von sich schneller bewegenden Fahrzeugen oder anderen gewünschten Merkmalen nach Bedarf zum Erhalten des Systems innerhalb des Betriebsbereichs zu erhöhen, ungeachtet der Parametereingabe durch den Fahrer.

In einer bevorzugten Ausführungsform der Erfindung ist das System angepasst zum Anzeigen zusätzlicher Informationen auf der Bildanzeigeeinheit wie einem Monitor, bevorzugter Weise grafische Einblendungen. Insbesondere ist Betriebssteuereinheit angepasst, dem Fahrers dabei zu assistierten (helfen), sein räumliches und situationsgebundenes Bewusstsein aufrecht zu erhalten, während er eine Bilderfassungseinheit-Ansicht schwenkt oder zoomt, durch Verständigen der Bilderfassungseinheit-Steuerung zum Zeichnen von entsprechenden grafischen Hinweisen auf der Bildanzeigeeinheit falls dies erforderlich ist für das System zum Verbleiben innerhalb des Betriebsbereichs. Die Betriebssteuereinheit ist angepasst zum Erkennen, dass der Fahrer versucht, Objekte heran zu zoomen, die sehr klein in der Bilderfassungseinheit-Ansicht erscheinen, und die Betriebssteuereinheit ist angepasst zum Verständigen der Bilderfassungseinheit-Steuerung zum Zeichnen einer grafischen Einblendung, die dem Fahrer den erwarteten Maßstab von Objekten bei verschiedenen Abständen zeigt, falls solch eine Einblendung bei diesem Zoomlevel gemäß dem Betriebsbereichs erforderlich ist. Zusätzlich ist die Betriebssteuerung angepasst zum Berechnen solcher Abstände basierend auf GPS, GLONASS, Galileo oder anderen Satellitennavigationssystemen, Geschwindigkeit, anderen Sensoren, drahtloser (wireless) Kommunikation mit anderen Fahrzeugen (V2V) oder anderen verfügbaren Informationen, und ist angepasst zum Informieren der Bilderfassungseinheit-Steuerung zum Anzeigen dieser Werte auf dem Monitor, wie von dem Betriebsbereich gefordert. Zusätzlich ist die Betriebssteuereinheit angepasst zum Erkennen, dass der Fahrer eine bestimmte Bilderfassungseinheit-Ansicht schwenkt, und die Betriebssteuereinheit ist angepasst zum Verständigen dieser Bilderfassungseinheit-Steuerung, dass sie grafische Hinweise auf dem Bildschirm zeichnet, der die aktiv betrachtete Region mit Bezug auf die Position des Fahrzeugs des Fahrers zeigt, oder die aktiv betrachtete Region mit Bezug auf das gesamte Sichtfeld der Bilderfassungseinheit zeigt, wie zum Erfüllen (genüge tun) des Betriebsbereichs gefordert.

Die Umformatierungsparameter beinhalten bevorzugter Weise eines oder mehrere aus den Folgenden: Seitenverhältnis, Zoom, Position eines Ansichtsfensters eines ausgewählten Bildes, Auflösung, Kontrast, Verzerrung/Entzerrung oder die Erzeugung oder das Hinzufügen von grafischen Einblendungen oder anderen Verbesserungen. Weitere Verbesserungen können eines oder mehrere zusätzliche Bilder in einem Bild enthalten. Je mehr Informationen in den Umformatierungsparametern enthalten sind, desto besser werden die gewünschten und notwendigen Merkmale auf dem Monitor gezeigt und folglich desto besser ist das räumliche und situationsbezogene Bewusstsein des Fahrers.

In einer bevorzugten Ausführungsform der Erfindung ist die Bilderfassungseinheit direkt mit der Betriebssteuereinheit verbunden, um die Betriebssteuereinheit mit direkten (live) Bilddaten der Umgebung um das Fahrzeug herum oder im Inneren des Fahrzeugs zu versorgen, zum Beispiel mittels einer zusätzlichen Passagierbilderfassungseinheit zum Betrachten eines Passagiers, zum Beispiel in einem Schulbus. Alternativ kann die Bilderfassungseinheit auch direkt mit der Bilderfassungseinheit-Steuerung verbunden sein, die die Bildsteuerung mit den direkten Bilddaten versorgt. Im Falle einer Einzelsteuerung anstelle der Betriebssteuereinheit ist die Bilderfassungseinheit direkt mit dieser Einzelsteuerung verbunden.

### KURZE BESCHREIBUNG DER ZEICHNUNGEN

Im Folgenden wird die Erfindung beispielhaft unter Bezugnahme auf die angehängten Figuren beschrieben, in denen:
FIG. 1 das Spiegelersatzsystem gemäß der Erfindung schematisch zeigt,
FIG. 2 eine detaillierte schematische Ansicht des Spiegelersatzsystems aus FIG. 1 ist; und
FIG. 3 die Änderung der Umformatierungsparameter abhängig von den Fahrerparametern und den Fahrzeugparametern diagrammatisch zeigt.

### DETAILLIERTE BESCHREIBUNG DER ERFINDUNG

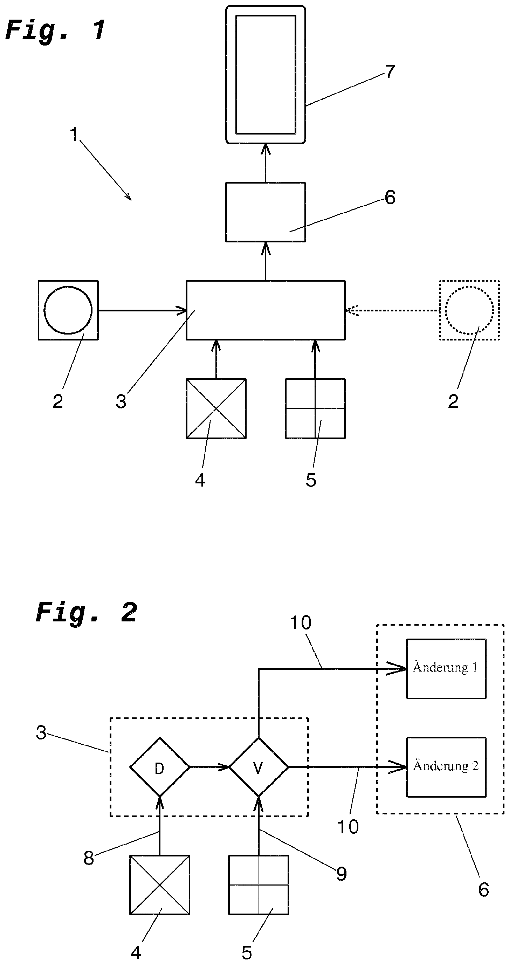

FIG. 1 zeigt eine schematische Ansicht eines Spiegelersatzsystems 1 eines Fahrzeugs (nicht gezeigt) gemäß der Erfindung. Das Spiegelersatzsystem 1 ist an dem Fahrzeug montiert. Das Spiegelersatzsystem 1 enthält eine Bilderfassungseinheit 2 auf der Außenseite des Fahrzeugs, eine Betriebssteuereinheit 3, eine Bilderfassungseinheit-Steuerung 6 und eine Bildanzeigeeinheit 7, die derart angeordnet ist, dass der Fahrer die Bildanzeigeeinheit leicht sehen kann, wenn er auf dem Fahrersitz sitzt. Die Betriebssteuereinheit 3 ist mit der Bilderfassungseinheit 2 und der Bilderfassungseinheit-Steuerung 6 verbunden. Die Bilderfassungseinheit-Steuerung 6 ist mit der Bildanzeigeeinheit 7 verbunden. Jedoch ist es auch denkbar, dass die Bilderfassungseinheit 2 mit der Bilderfassungseinheit-Steuerung 6 verbunden ist.

Die Bilderfassungseinheit 2, zum Beispiel eine Kamera oder ein Bildsensor, ist angepasst zum Erfassen eines Bildes, das einem Hauptspiegel (Sichtfeld II) entspricht, und eines Bildes, das einem Weitwinkelspiegel (Sichtfeld IV) entspricht. Wie in Fig. 1 durch gestrichelte Linien angedeutet ist, können auch zwei oder mehr Bilderfassungseinheiten 2 vorgesehen sein. Die eine oder zwei Bilderfassungseinheit(en) 2 sind Kameras. Eine geeignete Kamera als Bilderfassungseinheit 2 ist zum Beispiel eine digitale Videokamera, wie beispielsweise CCD- oder CMOS-Sensorkameras, bevorzugter Weise mit einer hohen Auflösung (high definition (HD) resolution). Es kann jedoch jede andere Kamera, die angepasst ist zum Beobachten der gesetzlich vorgeschriebenen Sichtfelder, als die Bilderfassungseinheit 2 verwendet werden.

In Übereinstimmung mit dem Vorhandensein von einer oder zwei Kamera(s) 2, ist die Bilderfassungseinheit-Steuerung 6 eine Kamerasteuerung.

Die Bildanzeigeeinheit 7 ist ein Monitor, bevorzugter Weise ein LCD-, TFT- oder LED-Monitor. Der Monitor kann für einen Fahrer sichtbar im Inneren oder außerhalb des Fahrzeugs installiert sein. Im Falle einer Installation des Monitors 7 im Inneren des Fahrzeugs, kann der Monitor mit einem Berührbildschirm (Touchscreen) ausgestattet sein, der es einem Fahrer ermöglicht, Informationen über einen oder mehrere Finger, Handflächen oder Gesten einzugeben. Andere Bildanzeigeeinrichtungen, wie beispielsweise Projektionen an die A-Säule oder jeden anderen Strukturteil des Fahrzeugs, sind auch möglich.

Die Betriebssteuereinheit 3 ist ferner mit einem Fahrersensor 4 zum Interagieren mit dem Fahrer und einem Fahrzeugsensor 5 zum Interagieren mit dem Fahrzeug verbunden. Insbesondere ermittelt der Fahrersensor 4 und/oder empfängt Dateneingaben des Fahrers (Fahrerparameter) und der Fahrzeugsensor 4 ermittelt und empfängt Fahrzeugparameter.

Die Betriebssteuereinheit 3 ist angepasst zum Empfangen von direkten (live) Bilddaten von der einen oder der mehreren Kamera(s) 2. Im Falle dass die eine oder die mehreren Kamera(s) 2 mit der Kamerasteuerung 6 verbunden sind, empfängt die Betriebssteuereinheit 3 die direkten Bilddaten von der Kamerasteuerung 6.

Wie in Fig. 2 gezeigt ist, ist der Fahrersensor 4 angepasst, Fahrerparameter 8 weiterzuleiten, die von den Fahrereingaben an die Betriebssteuereinheit 3 abhängen. Zum Beispiel kann der Fahrer den Zoom, die Position des Ansichtsfensters, die Auflösung eines oder mehrere angezeigter Bilder unter Verwendung von Hebeln, Steuerknüppel oder Knöpfen, aber auch durch Augenverfolgung, Sprachsteuerung oder vorprogrammierte Einstellungen (Vorlieben, Präferenzen) oder Touchpad-Eingaben auf entweder dem Monitor 7 oder einem separaten Touchpad zum Kommunizieren der Fahrervorlieben an die Betriebssteuereinheit 3 ändern. Diese Vorlieben beinhalten, was der Fahrer in einem bestimmten Monitor sehen möchte oder nicht sehen möchte, zusammen mit wie er es sehen möchte.

Der Fahrzeugsensor 5 ist angepasst zum Weiterleiten der Fahrzeugparameter 9, die von den Fahrzeuginformationen oder dem Fahrzeugbetriebszustand abhängen, zu der Betriebssteuereinheit 3. Die Fahrzeuginformationen können die Fahrzeug(fahrt)-Richtung, die Fahrzeuggeschwindigkeit, der Fahrzeugstandort, eine Anhängeranwesenheit oder - Abwesenheit, aber auch Wetterbedingungen, wie beispielsweise feuchte oder nasse Fahrbahnoberfläche oder die Außentemperatur, beinhalten. Der Fahrzeugbetriebszustand kann den Zustand von Fahrersteuerungen, wie beispielsweise das Anschalten eines Blinkers oder das Betätigen der Bremse oder des Gaspedals, beinhalten.

Die Betriebssteuereinheit 3 ist angepasst zum Definieren eines Betriebsbereichs für das System und eines entsprechenden Umformatierungsbereichs für die Umformatierungsparameter 10 und ist angepasst zum Versorgen der Kamerasteuerung 6 mit Umformatierungsparametern 10. Der Umformatierungsbereich ist der Bereich, in dem die Umformatierungsparameter 10 jederzeit verbleiben müssen, um zu gewährleisten, dass der Fahrer die gesetzlich vorgeschriebenen Sichtfelder oder jede andere Information, die vorher als essentiell festgelegt wurde, sehen kann, d.h. um sicherzustellen, dass das System in dem Betriebsbereich verbleibt, das heißt, dass die angezeigten Ansichten in dem Betriebsbereich verbleiben.

Die Definition des Betriebsbereichs kann Regelungen, Fahrzeugreferenzen und die Anforderung, immer das Bild einer oder mehrerer Bilderfassungseinheiten des Fahrzeugs anzuzeigen, beinhalten. Regelungen können ISO-Standards, wie beispielsweise ISO 16505, UN-Richtlinien, die von der europäischen Wirtschaftskommission erlassen werden, wie beispielsweise die UN/ECE-Richtlinie Nr. 46 für Rückspiegel, aber auch kundenspezifische Fahrzeugregelungen beinhalten. Fahrzeugreferenzen können die Abmessungen des Fahrzeugs oder die Anwesenheit oder Abwesenheit eines Anhängers beinhalten.

Bilderfassungseinheiten können zum Beispiel die Kamera(s) 2 oder eine oder mehrere Passagierkameras sein. Die Umformatierungsparameter 10 können das Ändern des Bildverhältnisses, des Zooms, der Position des Sichtfensters, der Auflösung, des Kontrastes, der Verzerrung/Entzerrung und eines Kommunikationsprotokolls, physikalischer Kommunikationsmedien beinhalten oder sie können das Erzeugen von oder das Hinzufügen von grafischen Einblendungen oder andere Verbesserungen beinhalten.

Die Kamerasteuerung 6 ist angepasst zum Umformatieren der direkten Bilddaten der Kamera 2, so dass sie zum Anzeigen auf dem Monitor 7 gemäß den

Umformatierungsparametern, die von der Betriebssteuereinheit 3 empfangen werden, geeignet sind, und ist angepasst zum Weiterleiten der Umformatierungsdaten an den Monitor 7. Der Monitor 7 zeigt die Umformatierungsdaten an, die von der Kamerasteuerung empfangen werden. Der Monitor 7 kann derart gestaltet sein, dass die Daten, die von der einen oder der mehreren Kamera(s) 2 erfasst werden, gleichzeitig in unterschiedlichen Bereichen des Monitors, bevorzugter Weise in verschiedenen Schwenk- oder Zoom-Konfigurationen, gezeigt werden. Sie können mit dem Verfahren eines geteilten Bildschirms (split screen method) angezeigt werden. Es ist jedoch auch denkbar, dass mehrere Monitore 7 vorgesehen sind, von denen jeder eine einzige Kameraansicht oder mehrere Kameraansichten anzeigt.

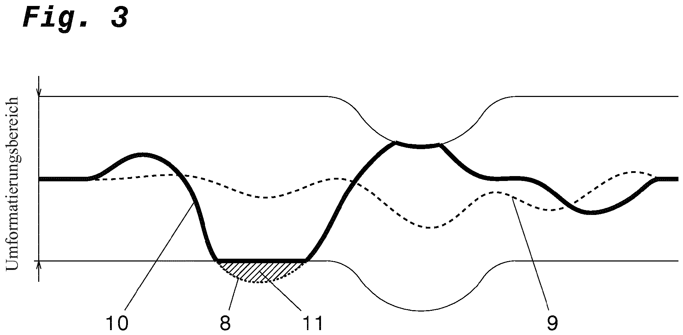

In FIG. 3 ist die Änderung der Umformatierungsparameter abhängig von den Fahrerparametern 8 und den Fahrzeugparametern 9 über die Zeit (X-Achse des Diagramms aus FIG. 3) gezeigt. Der Umformatierungsbereich der Umformatierungsparameter 10 erstreckt sich in der vertikalen Richtung (Auf- und Ab-Richtung in FIG. 3) und weist eine obere Grenze und eine untere Grenze (gezeigt durch durchgehende Linien) auf. Die Umformatierungsparameter müssen stets innerhalb der Grenzen des Betriebsbereichs/ Umformatierungsbereichs bleiben, d.h. zwischen der oberen und der unteren Grenze in FIG. 3. Die obere Grenze ist als eine im Wesentlichen horizontale Linie gezeigt, die sich an einem oberen Ende des Betriebsbereichs erstreckt. Die untere Grenze ist als eine im Wesentlichen horizontale Linie gezeigt, die sich an einem unteren Ende des Betriebsbereichs erstreckt. Zwischen der oberen und der unteren Grenze des Betriebsbereichs sind die Fahrzeugparameter 9 und die Umformatierungsparameter 10 als wellenförmige Linien gezeigt, die im Wesentlichen (hauptsächlich) von links nach rechts, d.h. in der horizontalen Richtung, verlaufen. Die links-rechts Richtung (X-Achse) entspricht der Zeit. Die Umformatierungsparameter 10 sind als eine durchgehende, dicke Linie gezeigt. Die Fahrzeugparameter 9 sind als eine gestrichelte Linie gezeigt. Die Umformatierungsparameter, die basierend auf den Fahrerparametern 8 berechnet werden, stimmen mit dem tatsächlichen Umformatierungsparameter 10 überein, außer in einem Gebiet 11 unterhalb der unteren Grenze des Betriebsbereichs, wo sie als eine gestrichelte Linie gezeigt sind.

In der beispielhaften Verteilung der Fahrzeug- und Umformatierungsparameter 9, 10, wie in Fig. 3 gezeigt, hält die Modifizierung des Bildes, das basierend auf den Fahrzeugparametern 9 angezeigt werden soll, das Bild jederzeit innerhalb des Betriebsbereichs. Die Fahrerparameter 8 führen zu Umformatierungsparametern 10, die sich innerhalb des zulässigen Bereichs der Umformatierungsparameter 10 für jeden abgebildeten Zeitpunkt befinden, außer dem Zeitpunkt, bei dem die Fahrerparameter 8 zu Umformatierungsparametern 10 außerhalb des Umformatierungsbereichs führen würden, d.h. unterhalb der unteren Grenzen des Betriebsbereichs in FIG. 3. Unter diesen Umständen, bei denen die Fahrerparameter 8 sich innerhalb des Betriebsbereichs befinden, werden sie als Umformatierungsparameter 10 ohne weitere Modifizierungen verwendet. Das bedeutet, dass die Fahrerwünsche betreffend die Darstellung auf der Bildanzeigeeinheit 7 vollständig ohne Berichtigung berücksichtigt werden. Für den Fall, dass die Fahrerparameter 8 unter die untere Grenze fallen und folglich den Betriebsbereich verlassen (gestrichelt dargestelltes Gebiet in FIG. 3), würde der Umformatierungsvorgang basierend auf den Fahrerparametern dazu führen, dass das angezeigte Bild nicht zufriedenstellend ist, d.h. die gesetzlichen Anforderungen zum Beispiel nicht erfüllt sind. D.h. das Verlassen des Betriebsbereichs kommt von einer oder mehrerer Fahrereingaben, durch die der Fahrer versucht, das angezeigte Bild, das auf dem Monitor 7 gezeigt ist, derart zu beeinflussen bzw. anzupassen, dass der Betriebsbereich verlassen wird. In diesem Fall berechnet die Betriebssteuereinheit 3 in Echtzeit basierend auf den Fahrereingaben, ob die Bedingungen zum Verbleiben in dem Betriebsbereich erfüllt werden und, falls dies nicht der Fall ist, übersteuert die Fahrerparameter 8, bevor sie sie als Umformatierungsparameter 10 verwendet, wie es in FIG. 3 gezeigt ist durch den Teil der durchgehenden Linie der Umformatierungsparameter 10, der mit der unteren Grenze des Betriebs-/Umformatierungsbereich übereinstimmt, so dass die Umformatierungsparameter 10 stets innerhalb des Umformatierungs-/Betriebsbereichs bleiben.

Zum Beispiel kann es dem Fahrer erlaubt sein, zwei oder mehrere Kamera(s) 2 auf einem Monitor 7 anzuzeigen, und die Betriebssteuereinheit 3 berechnet in Echtzeit, in welcher Größe jede Ansicht auf dem Monitor gezeigt werden muss, so dass sie klar von dem Fahrer zu sehen ist. Wenn der Fahrer versucht, weiter in eine bestimmte Kamera 2 hinein zu zoomen, wird die Betriebssteuereinheit 3 die Kamerasteuerung übersteuern und ein weiteres Zoomen verhindern. Falls der Fahrer versucht, eine bestimmte Kameraansicht auf dem Monitor 7 zu verkleinern, um mehr Platz für andere Kameras 2 zu machen, kann die Betriebssteuereinheit 3 diese Handlung zum Aufrechterhalten der Auflösung innerhalb des gewünschten Betriebsbereichs übersteuern. Die Betriebssteuereinheit 3 kann den Abstand des Monitors 7 zu dem Fahrer, die Auflösung des Monitors 7, die Lichtverhältnisse in der Fahrerkabine zu diesem Zeitpunkt, etc. berücksichtigen. Das Gebiet, das außerhalb des Betriebsbereichs liegt, ist in FIG. 3 als eine schraffierte Fläche dargestellt und mit dem Bezugszeichen 11 versehen.

Wie in Fig. 3 gezeigt ist, übersteuerte die Betriebssteuereinheit 3 im Falle von Fahrerparametern 8, die dazu führen, dass der Betriebsbereich verlassen wird, diese Fahrerparameter 8, um dem Fahrer dabei zu helfen, das räumliche und situationsbezogene Bewusstsein zu erhalten, obwohl er die ungeeigneten Änderungen der Anzeige auf dem Monitor 7 ausführt. D.h. die Betriebssteuereinheit 3 agiert als eine Korrektureinheit für die Fahrerparameter 8 und korrigiert die Fahrerparameter 8 derart, dass der Betriebsbereich aufrechterhalten wird. Insbesondere übersteuert die Betriebssteuereinheit 3 die Fahrerparameter 8 derart, dass die Umformatierungsparameter 10 nicht unter ihre untere Grenze fallen, sondern entlang der unteren Grenze des Betriebsbereichs verlaufen. Folglich verwendet die Betriebssteuereinheit 3 die veränderten Fahrzeugparameter 9 und die veränderten Fahrerparameter 8 zum Berechnen, ob das Spiegelersatzsystem 1 sich innerhalb des korrigierten Betriebsbereichs befindet und steuert die Umformatierungsparameter 10 zum Aufrechterhalten des Betriebs innerhalb des Betriebsbereichs. Das System hilft dem Fahrer, die wichtigsten Ansichten und Informationen klar und effektiv zu jeder Zeit zu sehen, während die Freiheit des Fahrers, das zu sehen, was er sehen möchte und wenn er es sehen möchte, maximiert ist, während der Betrieb des Systems 1 in den gesetzlich vorgeschriebenen Sichtfeldern sichergestellt wird.

Wie in Fig. 3 gesehen werden kann, ist der Umformatierungsbereich nicht notwendigerweise jederzeit identisch. Die horizontalen Grenzen des Umformatierungsbereichs in FIG. 3 sind nicht gerade, sondern können, wie es in FIG. 3 gezeigt ist, Abweichungen davon, gerade zu sein, aufweisen. Die Abweichungen werden verursacht, zum Beispiel durch Fahrzeugparameter, die eine Anpassung des Umformatierungsbereichs erfordern. Dies bedeutet, dass die Fahrerparameter 8 innerhalb dieser "verschobenen Zone" für den jederzeit einzuhaltenden Betriebsbereich verbleiben müssen.

Kombinationen von Merkmalen und Schritten, die in der obigen detaillierten Beschreibung offenbart sind, müssen nicht notwendig sein, um die Erfindung in dem breitesten Sinne auszuführen, und sind stattdessen lediglich gelehrt, um beispielhafte Ausführungsformen der Erfindung speziell zu beschreiben. Ferner, können diverse Merkmale der oben beschriebenen repräsentativen Beispiele sowie die nachfolgenden diversen unabhängigen und abhängigen Ansprüche auf eine Weise kombiniert werden, die nicht speziell und explizit aufgezählt ist, um zusätzliche sinnvolle Ausführungsformen der vorliegenden Lehren vorzusehen.

Alle in der Beschreibung und/oder den Ansprüchen offenbarten Merkmale sind angedacht, dass sie separat und unabhängig voneinander zum Zwecke der ursprünglichen schriftlichen Offenbarung als auch zum Zwecke einer Beschränkung des beanspruchten Gegenstands, unabhängig von den Zusammensetzungen der Merkmale in diesen Ausführungsformen und/oder den Ansprüchen, offenbart sind. Zusätzlich ist angedacht, dass alle Wertebereiche oder Angaben von Gruppen von (Funktions-)Einheiten jeden möglichen Zwischenwert oder jede mögliche Zwischeneinheit zum Zwecke der ursprünglichen schriftlichen Offenbarung als auch zum Zwecke einer Beschränkung des beanspruchten Gegenstands offenbaren.

### BEZUGSZEICHENLISTE

- 1: Spiegelersatzsystem
- 2: Bilderfassungseinheit (Kamera)
- 3: Betriebssteuereinheit
- 4: Fahrersensor
- 5: Fahrzeugsensor
- 6: Bilderfassungseinheit-Steuerung (Kamerasteuerung)
- 7: Bildanzeigeeinheit (Monitor)
- 8: Fahrerparameter
- 9: Fahrzeugparameter
- 10: Umformatierungsparameter
- 11: Gebiet außerhalb des Betriebsbereichs

## Patentansprüche

1. Spiegelersatzsystem (1) für ein Fahrzeug, bevorzugt ein Nutzfahrzeug, enthaltend
wenigstens eine Bilderfassungseinheit (2), die angepasst ist, dass sie um die Außenseite des Fahrzeugs herum montiert wird, und angepasst ist zum Erfassen von Bildern wenigstens eines Sichtfelds um das Fahrzeug herum,
wenigstens eine Bildanzeigeeinheit (7), die angepasst ist, dass sie für einen Fahrer sichtbar montiert ist,
wenigstens einen Fahrersensor (4), der angepasst ist zum Ermitteln von Informationen, die von dem Fahrer eingegeben werden,
eine Betriebssteuereinheit (3), die angepasst ist zum Steuern von Umformatierungsparametern (10) basierend auf Fahrerparametern (8), die von dem wenigstens einen Fahrersensor (4) empfangen werden, und
eine Bilderfassungseinheit-Steuerung (6), die angepasst ist zum Umformatieren von Videodaten, die von der wenigstens einen Bilderfassungseinheit (2) empfangen werden, gemäß den Umformatierungsparametern (10) und zum Weiterleiten der umformatierten Videodaten zu der wenigstens einen Bildanzeigeeinheit (7) zum Anzeigen, **dadurch gekennzeichnet, dass** die
Betriebssteuereinheit (3) angepasst ist zum Verwenden der Fahrerparameter (8) zum Berechnen in Echtzeit, ob sich das Spiegelersatzsystem (1) innerhalb eines vorgegebenen Betriebsbereichs befindet, wenn die Videodaten unter Verwendung der Umformatierungsparameter (10) umformatiert sind, und zum Steuern der Umformatierungsparameter (10) zum Aufrechterhalten eines Betriebs des Systems (1) innerhalb des Betriebsbereichs.

2. Spiegelersatzsystem (1) nach Anspruch 1, wobei das System (1) angepasst ist zum Festlegen eines Umformatierungsbereichs der Umformatierungsparameter (10) zum Aufrechterhalten eines Betriebs des Systems (1) innerhalb des Betriebsbereichs.

3. Spiegelersatzsystem (1) nach Anspruch 2, wobei die Bilderfassungseinheit-Steuerung (6) und/oder die Betriebssteuereinheit (3) ferner angepasst ist/sind zum Definieren des Umformatierungsbereichs der Umformatierungsparameter (10), wobei der Umformatierungsbereich vorzugsweise basierend auf einer oder mehrerer Bedienereingaben, bevorzugt Zoom-, Auflösungs- und/oder Kontrasteinstellungen und/oder zusätzlichen grafischen Eingaben und/oder Einblendungseingaben definiert ist.

4. Spiegelersatzsystem (1) nach einem der vorhergehenden Ansprüche, wobei das Sichtfeld dem Sichtfeld eines Hauptaußenspiegels und/oder dem Sichtfeld eines Weitwinkelaußenspiegels entspricht.

5. Spiegelersatzsystem (1) nach einem der vorhergehenden Ansprüche, wobei der Betriebsbereich basierend auf einer oder mehrerer aus gesetzlichen Vorgaben zum Anzeigen von Sichtfeldern und Fahrzeugabmessungen definiert ist.

6. Spiegelersatzsystem (1) nach einem der vorhergehenden Ansprüche, ferner enthaltend wenigstens einen Fahrzeugsensor (5), der angepasst ist zum Ermitteln von Fahrzeugparameterinformationen von dem Fahrzeug, wobei die Betriebssteuereinheit (3) angepasst ist zum Steuern der Umformatierungsparameter (10) basierend auf Fahrzeugparametern (9), die von dem wenigstens einen Fahrzeugsensor (5) empfangen werden, wobei die Fahrzeugparameter (9) vorzugsweise eine oder mehrere aus einer Fahrzeugfahrtrichtung, einer Fahrzeuggeschwindigkeit, eines Fahrzeugstandorts, einer Anhängeranwesenheit oder -abwesenheit und/oder Fahrersteuerungen aufweist, wobei die Betriebssteuereinheit (3) und/oder die Bilderfassungseinheit-Steuerung (6) weiter vorzugsweise angepasst ist/sind zum Definieren des Betriebsbereichs basierend auf einer Fahrsituation und/oder Wetterbedingungen.

7. Spiegelersatzsystem (1) nach einem der vorhergehenden Ansprüche, ferner enthaltend eine Bildanalyseeinheit, die angepasst ist zum Analysieren eines oder mehrerer Bilder, die von der wenigstens einen Bilderfassungseinheit (2) empfangen werden, basierend auf einer Informationseingabe des Fahrers und/oder auf Fahrzeugparameterinformationen.

8. Spiegelersatzsystem (1) nach einem der vorhergehenden Ansprüche, wobei die Betriebssteuereinheit (3) und/oder die Bilderfassungseinheit-Steuerung (6) angepasst ist zum Empfangen von Verkehrsdaten von externen Servern und/oder die Betriebssteuereinheit (3) und/oder die Bilderfassungseinheit-Steuerung (6) angepasst ist/sind zum Verwenden der Verkehrsdaten zum Erzeugen von Anzeigeinformationen, und/oder
wobei die Betriebssteuereinheit (3) und/oder die Bilderfassungseinheit-Steuerung (6) angepasst ist zum Empfangen zusätzlicher Sensordaten von einer oder mehrerer Abstandssensoreinheiten und die Betriebssteuereinheit (3) und/oder die Bilderfassungseinheit-Steuerung (6) angepasst ist/sind zum Verwenden der zusätzlichen Sensordaten zum Erzeugen von Anzeigeinformationen.

9. Spiegelersatzsystem (1) nach einem der Ansprüche 2 bis 8, wenn abhängig von Anspruch 2, wobei die Betriebssteuereinheit (3) und/oder die Bilderfassungseinheit-Steuerung (6) angepasst ist zum Definieren des Umformatierungsbereichs für die Umformatierungsparameter (10) basierend auf Sicherheitsinformationen, bevorzugt Kollisionsvorhersageinformationen, die Informationen über Hindernisse enthalten, und die Bilderfassungseinheit-Steuerung (6) und/oder die Betriebssteuereinheit (3) angepasst ist/sind zum Verwenden der Sicherheitsinformationen zum Erzeugen von Anzeigeinformationen.

10. Spiegelersatzsystem (1) nach einem der vorhergehenden Ansprüche, wobei die Betriebssteuereinheit (3) und die Bilderfassungseinheit-Steuerung (6) in derselben Hardware implementiert sind.

11. Spiegelersatzsystem (1) nach einem der vorhergehenden Ansprüche, wobei der Fahrersensor (4) eines oder mehrere aus wenigstens einem Berührfeld, einer Augenverfolgungseinrichtung, einer Sprachsteuerung, einem Hebel, einem Steuerknüppel und einem Knopf aufweist.

12. Spiegelersatzsystem (1) nach einem der Ansprüche 2 bis 11, wenn abhängig von Anspruch 2, wobei der Umformatierungsbereich der Umformatierungsparameter (10), der von der Betriebssteuereinheit (3) und/oder der Bilderfassungseinheit-Steuerung (6) festgelegt wird, das Sicherstellen einer minimalen Merkmalsauflösung für das angezeigte Bild beinhaltet.

13. Spiegelersatzsystem (1) nach einem der vorhergehenden Ansprüche, wobei die Bilderfassungseinheit-Steuerung (6) und/oder die Bilderfassungseinheit-Steuerung (6) angepasst ist/sind zum Erzeugen von zusätzlichen Informationen auf dem Monitor, bevorzugt grafischen Einblendungen.

14. Spiegelersatzsystem (1) nach einem der vorhergehenden Ansprüche, wobei die Umformatierungsparameter (10) eines oder mehrere der folgenden beinhalten: Seitenverhältnis, Zoom, Position des Ansichtsfensters des ausgewählten Bildes, Auflösung, Kontrast, Verzerrung/Entzerrung und Kommunikationsprotokoll, physikalische Kommunikationsmedien und/oder die Erzeugung von zusätzlichen grafischen Einblendungen.

15. Spiegelersatzsystem (1) nach einem der vorhergehenden Ansprüche, wobei die Bilderfassungseinheit (2) direkt mit der Betriebssteuereinheit (3) verbunden ist.

## Claims

1. Mirror replacement system (1) for a vehicle, preferably a commercial vehicle, comprising
at least one image capturing unit (2) adapted to be mounted around the exterior of the vehicle and adapted to capture images of at least one field of view around the vehicle,
at least one image display unit (7) adapted to be visibly mounted for a driver,
at least one driver sensor (4) adapted for detecting information input from the driver,
an operation controller (3) adapted for controlling reformatting parameters (10) based on driver parameters (8) received from the at least one driver sensor (4), and
an image capturing unit controller (6) adapted for reformatting video data received from the at least one image capturing unit (2) according to the reformatting parameters (10) and for forwarding the reformatted video data to the at least one image display unit (7) for displaying,
**characterized in that**
the operation controller (3) is adapted for using the driver parameters (8) to calculate in real time if the mirror replacement system (1) is within a predetermined operating range when the video data is reformatted by using the reformatting parameters (10) and for controlling the reformatting parameters (10) to maintain an operation of the system (1) within the operating range.

2. Mirror replacement system (1) according to claim 1, wherein the system (1) is adapted to set a reformatting range of the reformatting parameters (10) to maintain an operation of the system (1) within the operating range.

3. Mirror replacement system (1) according to claim 2, wherein the image capturing unit controller (6) and/or the operation controller (3) is/are further adapted to define the reformatting range of the reformatting parameters (10), wherein the reformatting range is preferably defined based on one or more of user inputs, preferably zoom, resolution and/or contrast settings and/or additional graphical inputs and/or overlays inputs.

4. Mirror replacement system (1) according to any one of the preceding claims, wherein the field of view corresponds to the field of view of a main exterior mirror and/or the field of view of a wide-angle exterior mirror.

5. Mirror replacement system (1) according to any one of the preceding claims, wherein the operating range is defined based on one or more of legal requirements for display of fields of view and vehicle dimensions.

6. Mirror replacement system (1) according to any one of the preceding claims, further comprising at least one vehicle sensor (5) adapted for detecting vehicle parameter information from the vehicle, the operation controller (3) being adapted for controlling the reformatting parameters (10) based on vehicle parameters (9) received from the at least one vehicle sensor (5), wherein the vehicle parameters (9) preferably include one or more of a vehicle driving direction, a vehicle speed, a vehicle location, trailer presence or absence and/or driver controls, wherein the operation controller (3) and/or the image capturing unit controller (6) is/are adapted to define the operating range based on a driving situation and/or weather conditions.

7. Mirror replacement system (1) according to any one of the preceding claims, further comprising an image analyzing unit which is further preferably adapted for analyzing one or more images received from the at least one image capturing unit (2) based on information input from the driver and/or on vehicle parameter information.

8. Mirror replacement system (1) according to any one of the preceding claims, wherein the operation controller (3) and/or the image capturing unit controller (6) is adapted to receive traffic data from outside servers and/or the operation controller (3) and/or the image capturing unit controller (6) is/are adapted for using the traffic data for generating display information, and/or
wherein the operation controller (3) and/or the image capturing unit controller (6) is adapted to receive additional sensor data from one or more distance sensor units and the operation controller (3) and/or the image capturing unit controller (6) is/are adapted for using the additional sensor data for generating display information.

9. Mirror replacement system (1) according to any one of claims 2 to 8, when dependent on claim 2, wherein the operation controller (3) and/or the image capturing unit controller (6) is adapted for defining the reformatting range for the reformatting parameters (10) based on safety information, preferably collision predicting information comprising information about obstacles, and the image capturing unit controller (6) and/or the operation controller (3) is/are adapted for using the safety information for generating display information.

10. Mirror replacement system (1) according to any one of the preceding claims, wherein the operation controller (3) and image capturing unit controller (6) are implemented in the same hardware.

11. Mirror replacement system (1) according to any one of the preceding claims, wherein the driver sensor (4) comprises one or more of at least one touch pad, eye tracking device, voice controller, lever, joystick and button.

12. Mirror replacement system (1) according to any of claims 2 to 11, when dependent on claim 2, wherein the reformatting range of the reformatting parameters (10) set by the operation controller (3) and/or the image capturing unit controller (6) includes ensuring a minimum feature resolution for the displayed image.

13. Mirror replacement system (1) according to any one of the preceding claims, wherein the image capturing unit controller (6) and/or the image capturing unit controller (6) is/are adapted for generating additional information on the monitor, preferably graphical overlays.

14. Mirror replacement system (1) according to any one of the preceding claims, wherein the reformatting parameters (10) include one or more of the following: aspect ratio, zoom, position of viewing window of extracted pictures, resolution, contrast, warping/de-warping and communication protocol, physical communication media and/or the creation of additional graphical overlays.

15. Mirror replacement system (1) according to any one of the preceding claims, wherein the image capturing unit (2) is directly connected to operation controller (3).

## Revendications

1. Système de remplacement de rétroviseur (1) pour un véhicule, de préférence un véhicule utilitaire, contenant
- au moins une unité d'acquisition d'images (2) qui est adaptée pour être montée autour du côté extérieur du véhicule et qui est adaptée pour acquérir des images d'au moins un champ de vision autour du véhicule,
- au moins une unité d'affichage d'images (7) qui est adaptée pour être montée de manière à pouvoir être regardée par un conducteur,
- au moins un capteur de conducteur (4) qui est adapté pour déterminer des informations qui sont entrées par le conducteur,
- une unité de commande fonctionnelle (3) qui est adaptée pour commander des paramètres de reformatage (10) en se basant sur des paramètres de conducteur (8) qui sont reçus de l'au moins un capteur de conducteur (4),
- une commande d'unité d'acquisition d'images (6) qui est adaptée pour reformater des données vidéo qui sont reçues de l'au moins une unité d'acquisition d'images (2) selon les paramètres de reformatage (10) et pour retransmettre les données vidéo reformatées à l'au moins une unité d'affichage d'images (7) en vue de leur affichage,
**caractérisé en ce que** l'unité de commande fonctionnelle (3) est adaptée pour utiliser les paramètres de conducteur (8) afin de calculer en temps réel si le système de remplacement de rétroviseur (1) se trouve à l'intérieur d'une zone de fonctionnement prédéterminée lorsque les données vidéo sont reformatées en utilisant les paramètres de reformatage (10) et pour commander les paramètres de reformatage (10) afin de conserver un fonctionnement du système (1) à l'intérieur de la zone de fonctionnement.

2. Système de remplacement de rétroviseur (1) selon la revendication 1, dans lequel le système (1) est adapté pour spécifier un domaine de reformatage des paramètres de reformatage (10) afin de conserver un fonctionnement du système (1) à l'intérieur de la zone de fonctionnement.

3. Système de remplacement de rétroviseur (1) selon la revendication 2, dans lequel la commande d'unité d'acquisition d'images (6) et/ou l'unité de commande fonctionnelle (3) sont aussi adaptées pour définir le domaine de reformatage des paramètres de reformatage (10), dans lequel le domaine de reformatage est défini de préférence en se basant sur une ou plusieurs entrées d'utilisateur, de préférence des réglages de zoom, de résolution et/ou de contraste et/ou des entrées graphiques supplémentaires et/ou des entrées d'insertion.

4. Système de remplacement de rétroviseur (1) selon l'une quelconque des revendications précédentes, dans lequel le champ de vision correspond au champ de vision d'un rétroviseur extérieur principal et/ou au champ de vision d'un rétroviseur extérieur grand-angle.

5. Système de remplacement de rétroviseur (1) selon l'une quelconque des revendications précédentes, dans lequel la zone de fonctionnement est définie en se basant sur une ou plusieurs des prescriptions légales concernant l'affichage de champs de vision et des dimensions de véhicules.

6. Système de remplacement de rétroviseur (1) selon l'une quelconque des revendications précédentes, contenant en outre au moins un capteur de véhicule (5) qui est adapté pour déterminer des informations de paramètre de véhicule pour le véhicule, dans lequel l'unité de commande fonctionnelle (3) est adaptée pour commander les paramètres de reformatage (10) en se basant sur des paramètres de véhicule (9) qui sont reçus de l'au moins un capteur de véhicule (5), dans lequel les paramètres de véhicule (9) comportent de préférence une ou plusieurs caractéristiques parmi un sens de marche de véhicule, une vitesse de véhicule, un emplacement de véhicule, une présence ou absence de remorque et/ou des commandes de conducteur, dans lequel l'unité de commande fonctionnelle (3) et/ou la commande d'unité d'acquisition d'images (6) sont aussi adaptées de préférence pour définir la zone de fonctionnement en se basant sur une situation de conduite et/ou sur des conditions météorologiques.

7. Système de remplacement de rétroviseur (1) selon l'une quelconque des revendications précédentes, contenant en outre une unité d'analyse d'images qui est adaptée pour analyser une ou plusieurs images, qui sont reçues de l'au moins une unité d'acquisition d'images (2), en se basant sur une entrée d'informations du conducteur et/ou sur des informations de paramètres de véhicule.

8. Système de remplacement de rétroviseur (1) selon l'une quelconque des revendications précédentes, dans lequel l'unité de commande fonctionnelle (3) et/ou la commande d'unité d'acquisition d'images (6) sont adaptées pour recevoir des données de trafic de serveurs externes et/ou l'unité de commande fonctionnelle (3) et/ou la commande d'unité d'acquisition d'images (6) sont adaptées pour utiliser les données de trafic afin de produire des informations d'affichage, et/ou
dans lequel l'unité de commande fonctionnelle (3) et/ou la commande d'unité d'acquisition d'images (6) sont adaptées pour recevoir des données de capteur supplémentaires d'une ou plusieurs unités de capteur de distance et l'unité de commande fonctionnelle (3) et/ou la commande d'unité d'acquisition d'images (6) sont adaptées pour utiliser les données de capteur supplémentaires afin de produire des informations d'affichage.

9. Système de remplacement de rétroviseur (1) selon l'une quelconque des revendications 2 à 8 lorsque celle-ci est dépendante de la revendication 2, dans lequel l'unité de commande fonctionnelle (3) et/ou la commande d'unité d'acquisition d'images (6) sont adaptées pour définir le domaine de reformatage pour les paramètres de reformatage (10) en se basant sur des informations de sécurité, de préférence des informations de prédiction de collision qui contiennent des informations sur des obstacles, et la commande d'unité d'acquisition d'images (6) et/ou l'unité de commande fonctionnelle (3) sont adaptées pour utiliser les informations de sécurité afin de produire des informations d'affichage.

10. Système de remplacement de rétroviseur (1) selon l'une quelconque des revendications précédentes, dans lequel l'unité de commande fonctionnelle (3) et la commande d'unité d'acquisition d'images (6) sont mises en oeuvre dans le même matériel.

11. Système de remplacement de rétroviseur (1) selon l'une quelconque des revendications précédentes, dans lequel le capteur de conducteur (4) comporte un ou plusieurs éléments parmi au moins un champ tactile, un dispositif de suivi du regard, une commande vocale, un levier, une manette de commande et un bouton.

12. Système de remplacement de rétroviseur (1) selon l'une quelconque des revendications 2 à 11 lorsque celle-ci est dépendante de la revendication 2, dans lequel le domaine de reformatage des paramètres de reformatage (10) qui est spécifié par l'unité de commande fonctionnelle (3) et/ou par la commande d'unité d'acquisition d'images (6) contient l'assurance d'une résolution de caractéristique minimale pour l'image affichée.

13. Système de remplacement de rétroviseur (1) selon l'une quelconque des revendications précédentes, dans lequel la commande d'unité d'acquisition d'images (6) et/ou la commande d'unité d'acquisition d'images (6) sont adaptées pour produire des informations supplémentaires sur le moniteur, de préférence des insertions graphiques.

14. Système de remplacement de rétroviseur (1) selon l'une quelconque des revendications précédentes, dans lequel les paramètres de reformatage (10) contiennent un ou plusieurs des éléments suivants: rapport largeur/hauteur, zoom, position de la fenêtre de vue de l'image sélectionnée, résolution, contraste, distorsion/redressement et protocole de communication, des moyens physiques de communication et/ou la production d'insertions graphiques supplémentaires.

15. Système de remplacement de rétroviseur (1) selon l'une quelconque des revendications précédentes, dans lequel l'unité d'acquisition d'images (2) est reliée directement à l'unité de commande fonctionnelle (3).
